# EUROPÄISCHE PATENTANMELDUNG

(11) **EP 0 575 640 A1**
(43) Veröffentlichungstag der Anmeldung: **29.12.1993**
(21) Anmeldenummer: 92110232.3
(22) Anmeldetag: 17.06.1992
(51) Int. Cl.: B32B 21/08, B29C 31/00, B60K 20/02, G05G 1/06

(54) **Verfahren zum Herstellen eines Bedienungshebelteiles sowie Bedienungshebelteil**

(71) Anmelder: EMPE-WERKE ERNST PELZ GmbH & CO. KG, D-82538 Geretsried (DE)
(72) Erfinder: Weber, Adolf, W-8487 Pressath (DE)
(74) Vertreter: Goddar, Heinz J., Dr.

(57) **Zusammenfassung**

Es wird ein Verfahren zum Herstellen eines Bedienungshebelteiles, insbesondere eines Schaltknüppelkopfteiles beschrieben, bei dem Furnierlagen mittels Formpressens gekrümmt und daraufhin zerteilt werden, wobei die entstehenden Teile zu einer Ummantelung zusammengefügt werden, welche sodann mit Kunststoffwerkstoff hinterspritzt wird.

Ferner wird ein entsprechendes Bedienungshebelteil beschrieben.

## Beschreibung

Die Erfindung betrifft ein Verfahren zum Herstellen eines Bedienungshebelteiles sowie ein Bedienungshebelteil.

Bedienungshebelteile, insbesondere Teile des Schaltknüppelkopfes in einem Kraftfahrzeug werden bisweilen aus Holz hergestellt.

Ein besonderes Problem besteht dabei darin, daß bei massiven Schaltknüppelköpfen im Falle eines Unfalls die Gefahr des Splitterns besteht.

Aus der DE 29 44 797 C2 ist ein Verfahren zum Herstellen eines dünnwandigen, mindestens in Querrichtung zu seiner Längsachse gekrümmten Leistenabschnitts bekannt. Dieses Verfahren eignet sich Jedoch nur zum Herstellen eines schwach gekrümmten Abschnittes, wohingegen das Ausbilden einer stark gekrümmten geschlossenen Kontur, wie sie bei einem Bedienungshebelteil vorliegt, ungeeignet ist.

Der Erfindung liegt die Aufgabe zugrunde, ein Verfahren zum Herstellen eines Bedienungshebelteiles anzugeben, das einfach und preisgünstig auszuführen ist und mit dem ein stabiles Bedienungshebelteil hergestellt werden kann, bei dem die Gefahr des Splitterns nicht gegeben ist.

Erfindungsgemäß wird die gestellte Aufgabe bei einem Verfahren der eingangs genannten Art mit folgenden Schritten gelöst:
Übereinanderlegen mindestens zweier Furnierlagen,
Aufgeben einer Krümmung auf die übereinanderliegenden Furnierlagen mittels Formpressens derart, daß ein gekrümmter Formkörper entsteht,
Zerteilen des Formkörpers zum Ausbilden von Teilschalen,
Zusammenfügen der Teilschalen an ihren den durch das Zerteilen entstehenden Kanten benachbarten Kanten zum Ausbilden einer Ummantelung, und
Hinterspritzen der Ummantelung mit Kunststoffwerkstoff.

Der Erfindung liegt die Erkenntnis zugrunde, daß eine aus Furnierwerkstoff eigentlich nicht herstellbare geschlossene stark gekrümmte Kontur durch entsprechendes Krümmen des Furnierwerkstoffs und Zusammensetzen zweier oder mehrerer derart gekrümmter Teile möglich ist, wodurch auch bei geschlossenen stark gekrümmten Konturen die Vorteile von Furnierwerkstoff, nämlich die Splitterfreiheit verwirklicht werden können.

Der Kunststoffwerkstoff, mit dem die Ummantelung hinterspritzt wird, dient mehreren Zwecken gleichzeitig:
1. Der Kunststoffwerkstoff bewirkt eine Stabilisierung bzw. Verstärkung der Ummantelung.
2. Der Kunststoffwerkstoff dient (neben anderen Maßnahmen) dem Zusammenhalt der zusammengefügten Teilschalen.
3. Der Kunststoffwerkstoff kann zum Halten von Befestigungselementen zum Anbringen des in Rede stehenden Bedienungshebelteiles verwendet werden.

Eine weitere Aufgabe der Erfindung besteht darin, ein Bedienungshebelteil zu schaffen, das splittersicher und stabil ist und das eine geschlossene stark gekrümmte Kontur aufweist.

Erfindungsgemäß wird die gestellte Aufgabe mit einem Bedienungshebelteil gelöst, das mindestens zwei Furnierlagen umfassende Teilschalen umfaßt, die zu einer Ummantelung zusammengefügt sind, wobei die Ummantelung mit einem Kunststoffwerkstoff hinterspritzt ist.

Es kann z. B. vorgesehen sein, den Formkörper derart zu zerteilen, daß vier Teilschalen gebildet werden, beispielsweise dann, wenn die Krümmung einen Winkel von 90° einschließt, so daß die vier Teilschalen zusammen eine geschlossene Kontur ergeben. Erfindungsgemäß bevorzugt ist es jedoch, daß das Zerteilen symmetrisch unter Ausbildung zweier Teilschalen erfolgt, um das Verfahren besonders einfach auszugestalten.

Um "sauberer" arbeiten zu können, kann ferner erfindungsgemäß vorgesehen sein, daß die oberste Furnierlage entlang der Linie(n) der späteren Zerteilung geteilt auf die übrigen Furnierlagen gelegt wird.

Das Zerteilen kann mittels eines Stanzwerkzeuges, eines Messers oder eines Laserstrahles erfolgen.

Ferner kann vorgesehen sein, daß die Teilschalen vor dem Zusammenfügen zweckentsprechend zugeschnitten werden.

Erfindungsgemäß bevorzugt ist dabei, daß das Zerteilen und das Zuschneiden in einem Arbeitsgang erfolgen.

Wie bereits erwähnt, kann erfindungsgemäß vorgesehen sein, daß mindestens ein Befestigungselement in den Kunststoffwerkstoff eingespritzt wird.

Um der Gesamtanordnung noch mehr Festigkeit zu verleihen, kann bei dem erfindungsgemäßen Verfahren schließlich vorgesehen sein, daß die zusammengefügten Teilschalen vor dem Ausspritzen miteinander verklebt werden.

Der Kunststoffwerkstoff kann erfindungsgemäß ein faserverstärter Duroplast oder Thermoplast sein.

Schließlich ist erfindungsgemäß bevorzugt, daß mindestens die oberste Furnierlage aus Holz ist.

Im folgenden ist die Erfindung anhand bevorzugter Ausführungsbeispiele unter Bezugnahme auf die beiliegenden Zeichnungen mit weiteren Einzelheiten näher erläutert. Dabei zeigen
- Figur 1: die Furnierlagen in der Ausgangsform;
- Figur 2: einen mittels Formpressens aus den Furnierlagen hergestellten Formkörper;
- Figur 3: eine Ansicht zur Erläuterung, wie der Formkörper zerteilt und die dadurch entstehenden Teilschalen zusammengefügt werden;
- Figur 4a und 4b: eine aus den Teilschalen zusammengefügte Ummantelung und
- Figur 5: ein fertiges Bedienungshebelteil.

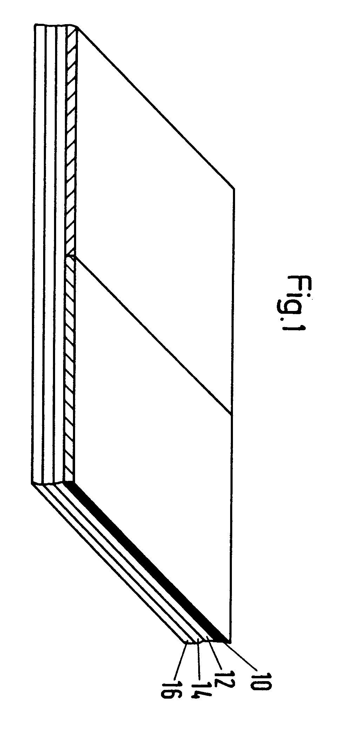

Figur 1 zeigt Furnierlagen 10, 12, 14 und 16 aus Holz. Die oberste Furnierlage 10 ist mittig, nämlich an der Linie der späteren Zerteilung, in zwei Hälften geteilt.

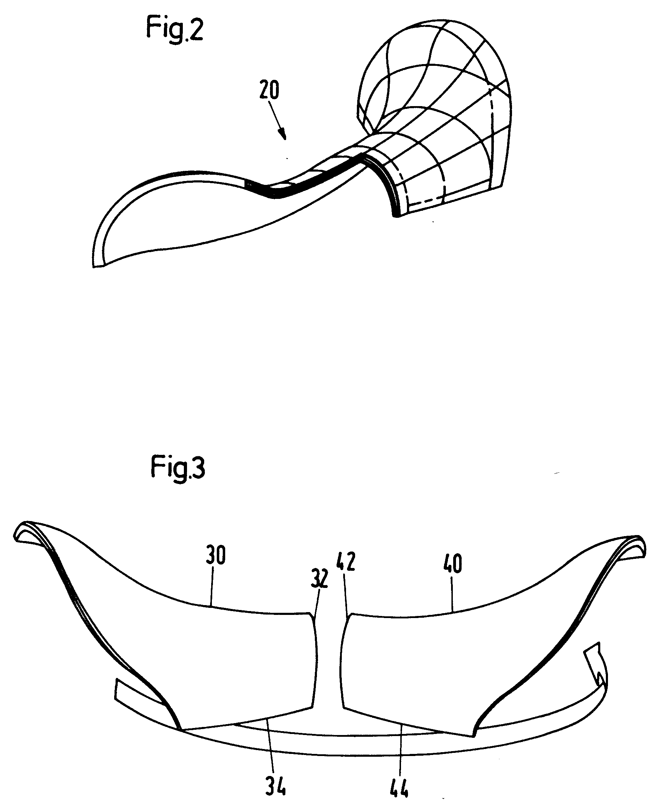

Die gemäß Figur 1 übereinander angeordneten Furnierlagen mit einer Länge von etwa 20 cm werden mittels Formpressens gekrümmt, wodurch ein Formkörper 20 gemäß Figur 2 entsteht.

Dieser Formkörper wird gemäß Figur 3 entlang der Linie zwischen den beiden Teilen der obersten Furnierlage 10, beispielsweise mittels eines Laserstrahles in zwei Teile 30 und 40 zerschnitten. Die entlang der Schnittfläche neu entstehenden Kanten sind mit 32 bzw 42 bezeichnet.

Wie in Figur 3 durch den Pfeil angedeutet, werden die beiden Teilschalen 30 und 40 gegeneinander "geklappt" und an den den genannten Kanten 32 und 42 benachbarten Kanten 34 bzw. 44 zu einer geschlossenen Kontur, einer Ummantelung 50 zusammengefügt, wobei die Teilschalen 30 und 40 miteinander verklebt werden.

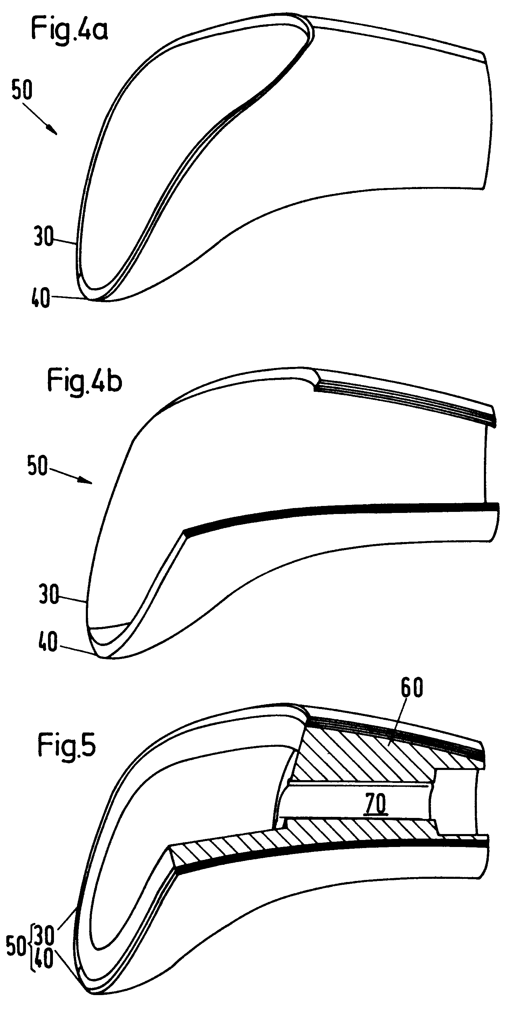

Die Ummantelung 50 ist in zusammengefügtem Zustand in den Figuren 4a und 4b gezeigt, wobei zur Erläuterung in Figur 4b ein Teilschnitt vorgenommen worden ist.

Die Ummantelung wird beispielsweise mit faserverstärktem Polyester hinterspritzt, wobei ein in Figur 5 mit der Bezugszahl 70 bezeichnetes Gewinde eingespritzt sein kann. Das Gewinde 70 dient zur Befestigung des so entstandenen Unterteils eines Schaltknüppelkopfes auf dem eigentlichen Schaltknüppel.

Gemäß dem vorstehend beschriebenen und in den Zeichnungen dargestellten Ausführungsbeispiel wird nur das Unterteil eines Schaltknüppelkopfes hergestellt, während das Oberteil aus weichem, z. B PVC-Werkstoff ist und auf dem Unterteil angebracht wird.

Selbstverständlich kann aber auch der gesamte Schaltknüppelkopf bzw. ein komplettes Bedienungshebelteil nach dem erfindungsgemäßen Verfahren hergestellt werden.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Herstellen eines Bedienungshebelteiles, insbesondere eines Schaltknüppelkopfteiles, mit folgenden Schritten:
- Übereinanderlegen mindestens zweier Furnierlagen (10,12,14,16),
- Aufgeben einer Krümmung auf die übereinanderliegenden Furnierlagen mittels Formpressens derart, daß ein gekrümmter Formkörper (20) entsteht,
- Zerteilen des Formkörpers zum Ausbilden von Teilschalen (30,40),
- Zusammenfügen der Teilschalen (30,40) an ihren den durch das Zerteilen entstehenden Kanten (32;42) benachbarten Kanten (34:44) zum Ausbilden einer Ummantelung (50), und
- Hinterspritzen der Ummantelung mit Kunststoffwerkstoff (60).

2. Verfahren nach Anspruch 1, dadurch gekennzeichnet, daß das Zerteilen symmetrisch unter Ausbildung zweier Teilschalen erfolgt.

3. Verfahren nach Anspruch 1 oder 2, dadurch gekennzeichnet, daß die oberste Furnierlage (10) entlang der Linie(n) der späteren Zerteilung geteilt auf die übrigen Furnierlagen (12,14,16) gelegt wird.

4. Verfahren nach einem der vorangehenden Ansprüche, dadurch gekennzeichnet, daß das Zerteilen mittels eines Stanzwerkzeuges, eines Messers oder eines Laserstrahles erfolgt.

5. Verfahren nach einem der vorangehenden Ansprüche, dadurch gekennzeichnet, daß die Teilschalen (30,40) vor dem Zusammenfügen zweckentsprechend zugeschnitten werden.

6. Verfahren nach Anspruch 5, dadurch gekennzeichnet, daß das Zerteilen und das Zuschneiden in einem Arbeitsgang erfolgen.

7. Verfahren nach einem der vorangehenden Ansprüche, dadurch gekennzeichnet, daß mindestens ein Befestigungselement (70) in den Kunststoffwerkstoff (60) eingespritzt wird.

8. Verfahren nach einem der vorangehenden Ansprüche, dadurch gekennzeichnet, daß die zusammengefügten Teilschalen (30,40) vor dem Hinterspritzen miteinander verklebt werden.

9. Bedienungshebelteil, inbesondere Schaltknüppelkopfteil, das mindestens zwei jeweils mindestens zwei Furnierlagen (10,12,14,16) umfassende Teilschalen (30,40) umfaßt, die zu einer Ummantelung (50) zusammengefügt sind, wobei die Ummantelung mit einem Kunststoffwerkstoff (60) hinterspritzt ist.

10. Bedienungshebelteil nach Anspruch 9, dadurch gekennzeichnet, daß der Kunststoffwerkstoff (60) faserverstärkt ist.

11. Bedienungshebelteil nach Anspruch 9 oder 10, dadurch gekennzeichnet, daß der Kunststoffwerkstoff (60) ein Duro- oder ein Thermoplast ist.

12. Bedienungshebelteil nach einem der Ansprüche 9 bis 11, gekennzeichnet durch mindestens ein in den Kunststoffwerkstoff (60) eingespritztes Befestigungselement (70).

13. Bedienungshebelteil nach einem der Ansprüche 9 bis 12, dadurch gekennzeichnet, daß die Teilschalen (30,40) miteinander verklebt sind.

14. Bedienungshebelteil nach einem der Ansprüche 9 bis 13, dadurch gekennzeichnet, daß mindestens eine Furnierlage (10, 12, 14, 16) aus Holz ist.
